# EUROPEAN PATENT SPECIFICATION

(11) **EP 1 230 318 B1**
(45) Date of publication and mention of the grant of the patent: **03.05.2006**
(21) Application number: 00942335.1
(22) Date of filing: 21.07.2000
(51) Int. Cl.: C09K 11/06, G02B 5/30

(54) **PROCESS FOR FORMING PHOTOLUMINESCENT POLARIZERS**
VERFAHREN ZUR HERSTELLUNG VON PHOTOLUMINESZENTEN POLARISATOREN
PROCEDE DE FABRICATION DE POLARISEURS PHOTOLUMINESCENTS

(30) Priority: 22.07.1999 US 145183 P
(43) Date of publication of application: 14.08.2002
(73) Proprietor: Landqart, 7207 Landquart-Fabriken (CH)
(72) Inventor: WEDER, Christoph, CH-8136 Gattikon (CH); SMITH, Paul, CH-8006 Zürich (CH)
(74) Representative: Isler & Pedrazzini AG
(86) International application number: PCT/IB2000/001009
(87) International publication number: WO 2001/007525

(56) References cited:
- EP-A- 0 348 964
- WO-A-99/01792
- WO-A-99/39222
- US-A- 4 842 781
- WEDER C ET AL: "HIGHLY POLARIZED LUMINESCENCE FROM ORIENTED CONJUGATED POLYMER/POLYETHYLENE BLEND FILMS" ADVANCED MATERIALS,DE,VCH VERLAGSGESELLSCHAFT, WEINHEIM, vol. 9, no. 13, 3 November 1997 (1997-11-03), pages 1035-1039, XP000721512 ISSN: 0935-9648
- CHEMICAL ABSTRACTS, vol. 132, no. 13, 27 March 2000 (2000-03-27) Columbus, Ohio, US; abstract no. 167049, MONTALI, A. ET AL: "Phase behavior and anisotropic optical properties of photoluminescent polarizers" XP002150127 & POLYM. PREPR. (AM. CHEM. SOC., DIV. POLYM. CHEM.) (1999), 40(2), 1169-117 ,
- EGLIN, MICHAEL ET AL: "Ultra - high performance photoluminescent polarizers based on melt-processed polymer blend" J. MATER. CHEM. (1999), 9(9), 2221-2226 , September 1999 (1999-09), XP002150126

## Description

### Field of the Invention

The present invention relates to a process for the manufacture of photoluminescent polarizers which are characterized in a high degree of polarization in their absorption and an emission which is either polarized or not, and to polarizers made by that process.

### Background of the Invention

Linear sheet polarizers, which convert unpolarized into linearly polarized light are well known in the art and are of major importance in a large variety of applications (L. K. M. Chan in "The Encyclopaedia of Advanced Materials", Vol. 2, D. Bloor, T. J. Brook, M. C. Flemings, S. Mahajan, eds., pp. 1294-1304 (1994), Elsevier Science Ltd., Oxford). However, the presently employed polarizers suffer from severe limitations some of which are summarized below.

The vast majority of linear sheet polarizers presently used, are dichroic polarizers which are based on an invention by Land et al. (E. H. Land, J. Opt. Soc. Am., Vol. 4, pp. 957 (1951)). As well established in the prior art, dichroic polarizers are produced from oriented, synthetic polymers which contain oriented dichroic species, for example absorbing dyes. Dichroic polarizers operate by the absorption of one polarization direction of incident light, thus, a dichroic polarizer which generates perfectly, linearly polarized light absorbs 50 % or more of unpolarized, incident light. Consequently, dichroic polarizers convert at least 50 % of the incident optical energy into heat which severely limits the efficiency of these polarizers and causes problems due to the excessive heating in combination with high-intensity light sources.

Recently, some photoluminescent (PL) materials have been demonstrated to efficiently combine the functions of a linear polarizer and a color filter and to yield linearly polarized, chromatic light in one single element (Ch. Weder et al., Adv. Mat., Vol. 9, pp. 1035-1039 (1997)). When processed into appropriate forms, these PL materials can be used as PL polarizers which lead to a substantial increase in device design, brightness and efficiency when used instead of a dichroic polarizer and an absorbing color filter, for example in liquid-crystal display devices (Ch. Weder et al., Science, Vol. 279, pp. 835-837 (1998); PCT IB98 00998). Depending on the application, PL polarizers should exhibit a high degree of polarization in their absorption or a high degree of polarization in their emission or both (Ch. Weder et al., Science, Vol. 279, pp. 835-837 (1998); PCT IB98 00998; A. Montali et al., Nature Vol.392, pp. 261-264 (1998); PCT IB99 00137). Most of the prior art PL polarizers comprise uniaxially oriented, formanisotropic, PL species, which absorb and emit light in linearly polarized fashion and, therefore, these PL polarizers are characterized in polarized absorption and emission. This effect is well known in the art; it was demonstrated in inorganic crystals more than a century ago (E. Lommel, Ann. d. Physik und Chemie, Vol. 8, pp. 634-640 (1879)). Since, the effect has been shown in a variety of systems, many of which are briefly summarized in "Spectroscopy with polarized light" (J. Michl et al., VCH Publishers, New York (1986)) and in PCT IB98 00998. The introduction and use of a polarizing energy transfer effect has led to a second generation of PL polarizers with further enhanced efficiency (A. Montali et al., Nature Vol. 392, pp. 261-264 (1998); PCT IB99 00137). The latter PL polarizers additionally comprise a randomly oriented sensitizer which maximally harvests optical energy by isotropic absorption, efficiently transfers the energy to the oriented, PL polymer which, subsequently, emits linearly polarized light.

Unfortunately, the methods disclosed in the prior art for the manufacture of PL polarizers are rather complex, comprise multiple steps, rely on the use of added solvents, demand a mechanical deformation step which requires unpracticably high draw ratios or yield PL polarizers with limited concentration of the PL guest (and, thus, limited brightness and efficiency), or rather low dichroic ratios in absorption as well as emission of usually below 10.

It is therefore the objective of the present invention to provide a process that allows to manufacture PL polarizers with a high dichroic ratio in absorption and an emission which is either polarized or not, in an economical and satisfactory way.

The tensile deformation of ductile, amorphous or semicrystalline polymers is well known as an extremely versatile method to introduce high degrees of uniaxial order in polymeric materials (I.M. Ward, "Structure and Properties of Oriented Polymers" (1975), Applied Science Publishers, London). Orientation of the macromolecules is introduced by solid-state drawing at temperatures above the glass transition but - in case of semicrystalline materials - below the melting temperature of the polymer. Based on this concept, guest-host systems can be produced, in which form-anisotropic, low-or high-molecular guest molecules adopt the orientation of the polymeric host. Different possibilities exist to incorporate the guest molecules into the polymeric host; common procedures are:
i) providing a solution comprising the relevant components and subsequent solution-processing and evaporation of the solvent;
ii) melt-mixing of the two or more components and subsequent melt-processing of the resulting blend;
iii) swelling of the carrier polymer with a solution comprising the guest and subsequent evaporation of the solvent;
iv) diffusion of the guest in the vapor phase into the carrier polymer.

Tensile deformation, leading to orientation, can always be performed after the incorporation of the guest, but for techniques iii) and iv) that rely on diffusion it can, in principle, also be done beforehand. Processes following routes i, iii, iv are known from the prior art and exhibit one or more of the severe disadvantages summarized above. Processes following route ii) are sometimes employed for the manufacture of absorbing polarizers (US Patents Nos. 4,842,781; 5,258,208; 5,312,568; European Patent No. 348,964) (the term melt-mixing is usually employed for mixing of relevant components that are in the molten, or fluid state). A somewhat related process has also been suggested for the manufacture of PL polarizers which comprise an additional sensitizer and are designed to exhibit a low degree of polarization in absorption (characterized by a dichroic ratio of preferably less than about 1.5, but in any case less than about 3.5) and a high degree of polarization in emission (characterized by a dichroic ratio of preferably more than about 15, but in any case more than about 4) (PCT IB99 00137). However, as can be clearly seen from the prior art, the melt-processable systems described before are considered as often very limited and the general processes disclosed, i.e., melt-processing a mixture of dichroic dyes or dystuff with a polymer, film making and -drawing, cannot readily be adapted for new systems, including the PL polarizers which are of interest in the present invention. For example, the prior art processes are limited to specific dyes, for example apolar dichroic dyes showing liquid crystal properties (European Patent No. 348,964) or polymers, for example semicrystalline polyolefins (US Patents Nos. 5,258,208; 5,312,568), or very specific combinations of selected dyes and polymers, for example hydrophilic polymers mixed with water-insoluble dyes (US Patent No. 4,842,781). In addition, the prior art processes are often limited to very particular processing conditions, which, for example require conditions under which the dye is in the liquid state during drawing (US Patent No. 5,312,568), or require drawing unconveniently close to the glass transition temperature of the polymer (US Patent No. 4,842,781). In particular, a convenient, versatile and efficient process to manufacture PL polarizers has not been disclosed that comprises the steps of
(a) providing a blend comprising at least one, non-liquid crystalline small molecule photoluminescent dye and at least one semicrystalline polyolefin carrier polymer by melt-mixing and
(b) melt-processing said blend into a body having a first shape and
(c) anisotropically distorting said first shape of said body by a draw ratio of less than about 10 to yield said photoluminescent polarizer,
   and which results photoluminescent polarizers that
(d) exhibit a high dichroic ratio in absorption of more than about 10 at a wavelength that can be employed for photoexcitation and an emission which is polarized or not, and
(e) wherein phase separation between the photoluminsecent dye and the carrier polymer is reduced or avoided during the steps of melt-processing and object-forming,
(f) preferably do not comprise a sensitizer and
(g) have been produced by applying minimal mechanical deformation

It is, thus, the objective of the present invention, to provide PL polarizers according to the above criteria. It is also an objective of the present invention to provide a process for forming the latter.

### Definitions

Photoluminescent and photoluminescence are hereinafter abbreviated with the designation PL.

Herein, a PL dye is defined as a PL species and/or moiety and/or domain, which gives rise to a significantly anisotropic, that is linearly polarized, absorption of the PL polarizer in which it is comprised.

Herein, an emitter is defined as a PL species and/or moiety and/or domain, which gives rise to an essentially isotropic emission of the PL polarizer in which it is comprised.

The designation PL polarizer refers to a, for instance, shaped object that is characterized in exhibiting photoluminescence and that, according to the present invention, exhibits a polarized absorption and an emission which is polarized or not. In connection with prior art elements, the term PL polarizer is also used for elements that exhibit an essentially unpolarized absorption and a polarized emission. The PL polarizer may be of many useful forms, for example, but not limited to, a fiber, rod, film, sheet, layer, tape or plate, which may be homogeneous and continuous, and may be structured or patterned, and may comprise multiple individual elements, zones or pixels, or arrays thereof.

To clarify, for example, the conditions of experiments, the following common definitions of the several axes will be used:

The polar axis of a linear polarizer or analyzer is the direction of the electrical field vector of the light that is transmitted by the polarizer films. The polar axis of a linear PL polarizer is the direction of the electrical field vector of the light absorbed or emitted by the PL polarizer.

Herein, the degree of emission polarization of a linear PL polarizer (also referred to as degree of polarization in emission) is expressed as the emission dichroic ratio (also referred to as dichroic ratio in emission) of the PL polarizer. The emission dichroic ratio is defined as the ratio of the integrated emission spectra measured through a linear polarizer (analyzer) with its polar axis parallel and perpendicular to the PL polarizer axis, using unpolarized excitation light.

Herein, the degree of absorption polarization of a linear PL polarizer (also referred to as degree of polarization in absorption) is expressed as the absorption dichroic ratio of the PL polarizer. The absorption dichroic ratio is defined as the ratio of the absorption measured with incident light linearly polarized parallel and perpendicular to the PL polarizer axis, measured at the wavelength used for excitation of the PL polarizer.

Herein, the excitation wavelength is defined as the wavelength that is used for excitation of a PL polarizer.

Herein, the terms absorption and emission relate to optical processes.

Herein, the draw ratio is used as a measure to describe the mechanical deformation of an object, in particular a PL polarizer, along a preferential axis. The draw ratio is defined as the ratio of the length dimension of an object after and before mechanical deformation, measured along the main deformation axis.

### Brief Description of the Drawings

The above objects and advantages of the present invention will become more apparent by describing in detail preferred embodiments thereof with reference to the attached drawings in which:
Fig. 1 is a plot of absorption dichroic ratio versus draw ratio for various PL polarizers which were prepared by a process disclosed in the prior art. Values are given for the composition indicated in the Figure and were measured around the absorption maxima; typically at 485 (for EHO-OPPE and O-OPPE blends), 510 (for MEH-PPV blend) and 365 nm (for BPB derivatives).

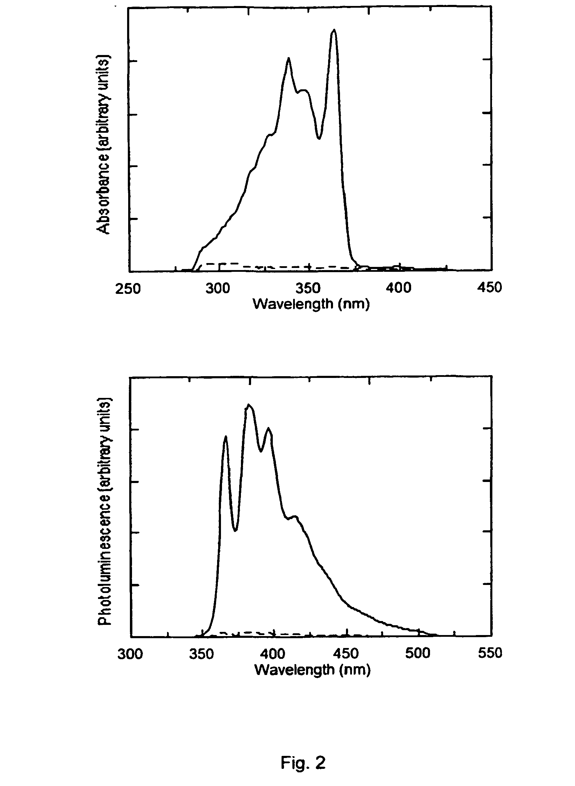

Fig. 2 displays the dichroic properties of a PL polarizer according to the present invention (draw ratio = 10) based on a 0.2 % w/w BPBC12 / LLDPE blend that was manufactured by a process according to the present invention. (A) Polarized absorption spectra recorded with incident light linearly polarized parallel (solid line) and perpendicular (dashed line) to the PL polarizer axis. (B) Polarized PL spectra, recorded under isotropic excitation and polarized detection through a linear polarizer (analyzer) with its polar axis parallel (solid line) and perpendicular (dashed line) to the PL polarizer axis.
Fig. 3 is a plot of absorption dichroic ratio versus draw ratio for PL polarizers according to the present invention that were prepared by a process according to the present invention.
Fig. 4 shows under a) - c) three images of about 120 micrometer thick films taken by unpolarized optical microscopy each.
Fig. 5 shows under a) - c) three images of about 120 micrometer thick films taken by unpolarized optical microscopy each.

### Description of the Invention

One object of the present invention to overcome the problems related to the prior art processes for the manufacture of PL polarizers is to provide an efficient and satisfying process for the manufacture of PL polarizers that exhibit a high dichroic ratio in absorption and a high dichroic ratio in emission. It is further an objective to provide polarizers made by that process.

Another object of the present invention to overcome the problems related to the prior art processes for the manufacture of PL polarizers is to provide an efficient and satisfying process for the manufacture of PL polarizers that exhibit a high dichroic ratio in absorption and emission which is essentially unpolarized. It is further an objective to provide polarizers made by that process.

Other objects of the present invention will become apparent to those skilled in the art in the following detailed description of the invention and the appended claims.

The present invention is based on our surprising finding that the foregoing and other objects are achieved by melt-processing, object-forming and solid-state deformation of blends of one or more PL dyes and a thermoplastic carrier polymer. Moreover, we have found that if appropriate conditions are selected, PL polarizers can be manufactured that exhibit unusually high dichroic ratios in absorption, and an emission which, selectively, is either highly polarized or not, when a minimal mechanical deformation is applied. Most importantly, we have now found that the properties, particularly the dichroic ratio, of PL polarizers thus produced, are optimized at minimal mechanical deformation, if phase-separation between the PL guest and the carrier polymer is reduced or avoided during the steps of melt-processing and object-forming.

By phase-separation domains, clusters and/or aggregations of PL guest molecules develop in the carrier polymer which have the tendency to keep together even during the mechanical deformation step. As long as the PL dye molecules are bound in such structures (and as long as they are not brought into the liquid phase) they usually cannot be efficiently aligned. Only under the application of very high drawing rates the said structures become sufficiently desintegrated to allow the PL dye molecules to align themselves along the preferred drawing direction (Ch.Weder et al., Adv. Mater. Vol. 9, pp.1035 -1039 (1997)).

### Composition of the PL polarizer

The PL polarizers according to the present invention are characterized in that they comprise at least one PL dye and at least one semicrystalline polyolefin carrier polymer. Additional species might also be present, for example, to further improve the PL properties, as processing aides, or to provide, for example, desired mechanical properties. Also, emitter molecules might be added that, through a depolarizing energy transfer effect (i.e., a reverse effect of the polarizing energy transfer described in the prior art, cf. A. Montali et al., Nature Vol. 392, pp. 261-264 (1998); PCT IB99 00137), give rise to an essentially isotropic emission. The criteria for the selection of PL dyes that might be used in the present invention will become apparent to those skilled in the art by the guidelines and examples given below. To avoid any replication from the known prior art, all the below mentioned literature references in relation to appropriate species are herewith included in, and part of the present invention.

The PL dye is a PL species, preferably of high quantum efficiency and with an emission spectrum that is appropriate for the desired application. Most importantly, the PL dye, when incorporated in PL polarizers according to the present invention, must give rise to an absorption which is characterized by a high degree of polarization. This is, according to the present invention, achieved by employing an orientation step which induces a significant uniaxial orientation of the PL dye, which can result, as well known in the art, in a significant degree of polarization in absorption and emission. Although molecular shape is not the sole determining factor, it is well known in the art that a high form-anisotropy usually enables an efficient orientation, as disclosed by E. Thulstrup et al. (J. Am. Chem. Soc., Vol. 104, p. 5594 (1982).

We have found, as is evident from the examples given below, that non-liquid crystalline small molecules such as 1,4-bis[2-(4',4"-methoxyphenyl)ethynyl]benzene (BPBC1), and 1,4-bis{2-[4',4"-(2-ethyl hexyloxy)phenyl]ethynyl}benzene (BPBC2-6), and liquid crystalline small molecules such as 1,4-bis[2-(4',4"-octyloxyphenyl)ethynyl] benzene (BPBC8), 1,4-bis[2-(4',4"-dodecyloxyphenyl)ethynyl]benzene (BPBC12) and 1,4-bis[2-(4',4"-triacontyloxyphenyl)ethynyl]benzene (BPBC30), for example, are useful as PL dye in preferred embodiments of the present invention: 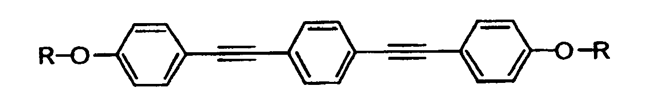 BPBC1: R=CH₃
BPBC8: R = C₈H₁₇
BPBC2-6: R = CH₂CH(C₂H₅)C₄H₉
BPBC12: R C₁₂H₂₅
BPBC30: R = C₃₀H₆₁

PL polymers, for example, poly(*p*-phenyleneethynylene) derivatives such as EHO-OPPE and O-OPPE and poly(*p*-phenylenevinylene) derivatives such as (poly[2-methoxy-5-[2'-ethyl-hexyloxy]-*p*-phenylenevinylene] (MEH-PPV) may also be used as PL dyes in preferred embodiments of the present invention:

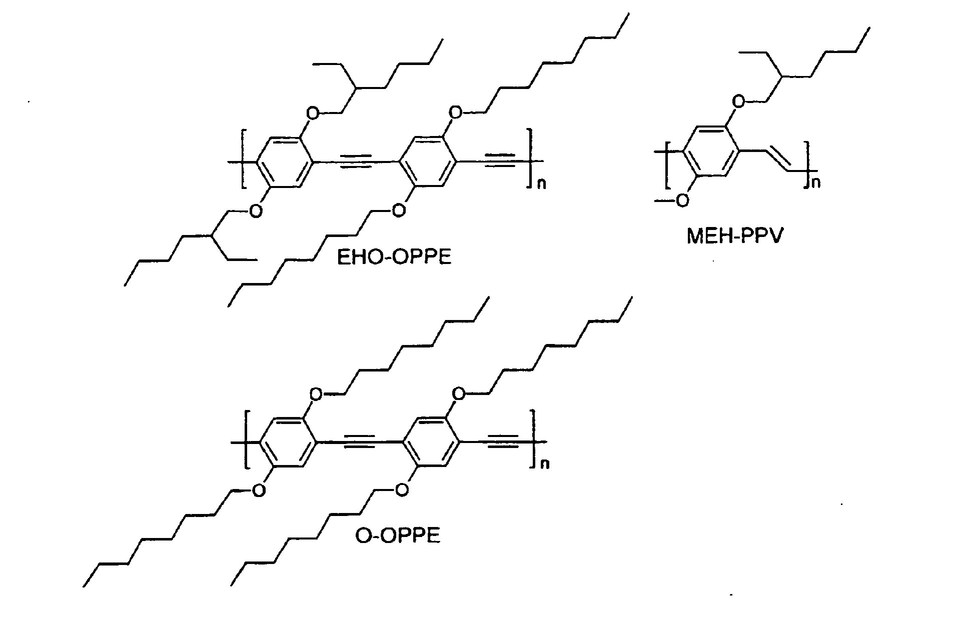

Other suitable, representative species that can be useful as PL dyes in the present invention are organic species, such as small molecules, oligomers or polymers, or mixtures thereof or of organic and inorganic materials. Representative examples of small organic species and oligomers useful in the present invention can be found in, for example, "Organic Luminescent Materials" by M. Krasovitskii et al. (VCH Publishers, Weinheim, (1988)); "Spectroscopy with polarized light" by J. Michl et al. (VCH Publishers, New York, (1986)).

Oligomers and polymers that are useful as PL dye in the present invention include, but are not limited to those molecules that comprise one or more of the following moieties: 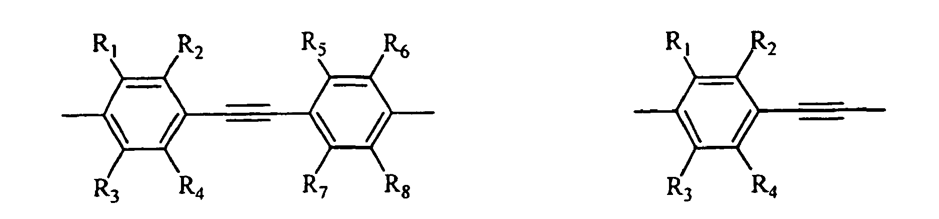 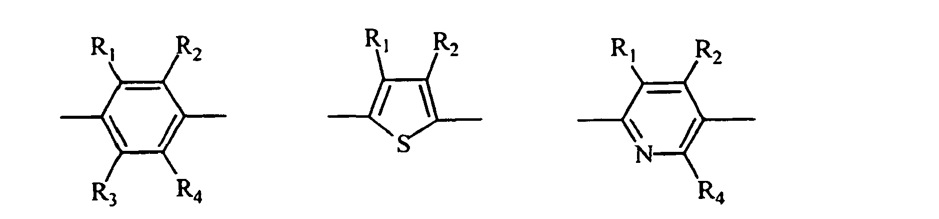 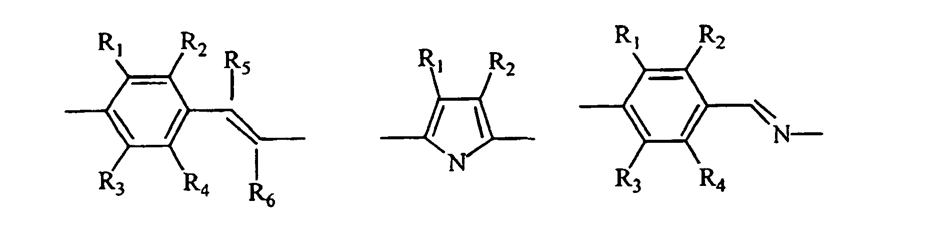 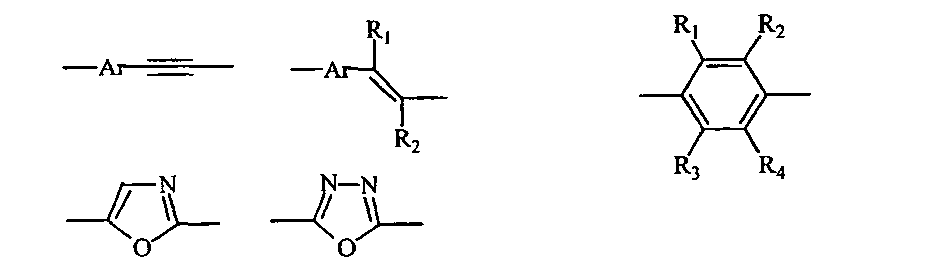 where Ar is an arylene group including, but not limited to the following moieties: 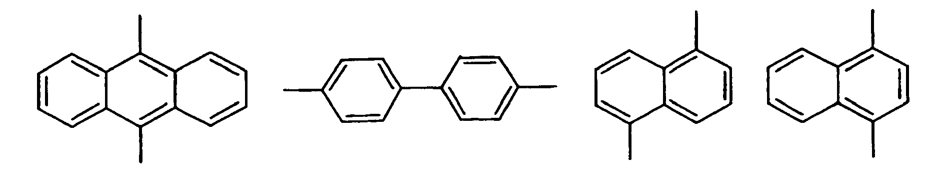 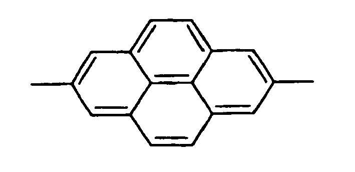 and where R₁-R₆, are the same or different at each occurrence, and are composed of, for example, but not limited to: H, alkyl, alkyloxy, CF₃, CN, phenyl, NH₂, NH-alkyl, N(alkyl)₂, NO₂ and Si(alkyl)₃.

Other suitable, representative, species that can be useful as PL dye in the present invention are inorganic materials, such as GalnP-compounds (P. J. Pearah et al. Appl. Phys. Lett. Vol. 62, pp. 729-731), ZnSe (L. Worschech et al., "Blue Laser Light Emitting Diodes", Int. Symp., pp. 421-424, Eds. A. Yoshikawa, Tokyo, Japan, 1996), or tris(bipyridine)ruthenium(2+) intercalated cadmiumthio-hypophosphazene (E. Lifshitz et al., J. Phys. Chem. Solids, Vol. 52, pp. 1081-1086 (1991), or inorganic oligomers or polymers, or mixtures thereof.

As mentioned heretofore, at least one semicrystalline polyolefin carrier polymer is comprised in the PL polarizers according to the present invention. The carrier polymer may provide the mechanical properties that are appropriate for the desired application. Most importantly, the carrier polymer should allow for melt-processing and the subsequent orientation step. It is well known in the art that a variety of ductile, amorphous or, preferably, semicrystalline polymers meet these requirements. According to the present invention, the carrier polymer should in addition also allow for the fabrication of, preferably homogeneous, blends comprising at least one PL dye and at least one carrier polymer by melt-mixing.

We have found, as is evident from the examples given below, that semicrystalline polyolefins such as polyethene (also known as polyethylene) and polypropene (also known as polypropylene), for example, are useful as carrier polymer in preferred embodiments of the present invention. In particular, we have found that if for example linear low-density polyethylene (LLDPE) is used as a carrier polymer, PL polarizers can be manufactured, according to the present invention, that exhibit unusually high dichroic ratios in absorption, at desirably low draw ratios. Other examples of semicrystalline or amorphous polymers that are preferably used as carrier polymer in preferred embodiments of the present invention, are polyvinylidene halides, polyesters, polyamides, polyacrylonitriles, polyvinylalcohols and so forth. In the context of the present invention, also copolymers can be used as the carrier polymer, for example ethylene/propylene copolymers and so forth. The molecular weight of the carrier polymer employed may vary within wide limits. Polymers having lower molecular weights have, as a rule, good melt-processing characteristics. At the other hand, it is also well known in the art, that the maximal achievable draw ratio usually increases with molecular weight. As another rule, linear polymers are used by preference on account of their high degree of orientability. At the other hand, a certain degree of branching or side-chains may increase the compatibility of the carrier polymer and the guest molecules, here the PL dye, and thus, lead to more homogeneous blends. The one skilled in the art should be deemed capable of selecting the right carrier polymer, depending on the envisaged application and the PL dye employed.

### Fabrication of the PL polarizer

The process for fabrication of the PL polarizer comprises, according to claim 1, the steps of
(a) providing a blend comprising at least one, non-liquid crystalline small molecule photoluminescent dye and at least one semicrystalline polyolefin carrier polymer by melt-mixing and
(b) melt-processing said blend into a body having a first shape and
(c) anisotropically distorting said first shape of said body by a draw ratio of less than about 10 to yield said photoluminescent polarizer,
wherein said photoluminescent polarizer is characterized by a dichroic ratio in absorption of more than about 10 at a wavelength that can be employed for photoexcitation, and
wherein said photoluminescent polarizer is characterized by an emission which is either polarized or not,
wherein phase separation between the photoluminsecent dye and the carrier polymer is reduced or avoided during the steps of melt-processing and object-forming.

According to the present invention, blends comprising at least one PL dye and at least one carrier polymer can be achieved by a wide variety of melt-mixing techniques, for example, extrusion, kneading and so forth. According to the present invention also additional mixing steps can be applied, which not necessarily are melt-mixing steps. Melt-processing of the blends thus fabricated can be achieved by a number of methods, including, for example, extrusion, calendering, pressing, spinning, casting, filmblowing, and so forth. The one skilled in the art should be deemed capable of selecting the right melt-processing technique, depending on the envisaged application, the desired shape of the PL polarizer, and the composition employed. Orientation of the blend object thus produced is introduced by anisotropic distortion, according to the present invention, under conditions at which the blend material is in a ductile state, typically, at temperatures above the glass transition temperature of the carrier polymer and, in case of semicrystalline carrier polymers, close to, but below the melting temperature of the carrier polymer. The anisotropic distortion step, according to the present invention, can be achieved by different means, for example, tensile deformation, for example uniaxial drawing. However, even if a multiaxial process is selected, according to the present invention, one preferential orientation axis should be selected and induced. As it will be obvious to the one skilled in the art, the process for fabrication of the PL polarizer, according to the present invention, may comprise the above described steps in distinguishable fashion. Alternatively, two or more of these steps may be adequately combined. For example, a melt-extrusion process may be used, according to the present invention, to provide a blend and shape the latter into a body having a first shape.

Most importantly, we have now found that unusually high dichroic ratios, of PL polarizers fabricated according to the present invention, can be achieved already at minimal mechanical deformation, if phase-separation between the PL dye and the carrier polymer is reduced or avoided during the steps of melt-processing and object-forming. As it will become evident from the examples below, this requires a highly efficient mixing process. Another important requirement is the physico-chemical compatibility of the carrier polymer and the PL dye employed. As evidenced by the examples below, and in strong contrast to the prior art (US Patents Nos. 5,258,208; 5,312,568; European Patent No. 348,964) it is often only of minor importance whether the guest molecule (here the PL dye) can exhibit a liquid-crystalline state or not, and whether the processing temperature is above the or below the melting temperature of the guest molecule. The PL dye preferably contains groups which are similar to those present in the selected carrier polymer and enhance the physico-chemical interactions between these species. While it may depend on the specific composition to which extent a possible phase separation between the PL dye and the carrier polymer can be tolerated before the anisotropic distortion step, the essential absence of inhomogenities is often a good indication for a suitable blend according to the present invention.

The homogenity of the blends can for example be determined by optical microscopy employing transmitted or reflected light, polarized or unpolarized techniques, and fluorescense microscopy. Also applicable for the examination of the homogenity of the blends would be thermal methods, including for example calorimetic measurements such as differental scanning calorimetry (DSC). Here, the (at least partial) suppression of the melting transition of one of the involved components can be taken as a measure for a sufficiently homogenous system.

Another methodology for the examination of the homogenity of the blends include X-ray diffraction methods. Here, the essential absence of peaks that are characteristic for PL dyes can be taken as a measure for a sufficiently homogenous system.

Still another method for the examination of the homogenity of the blends would be single molecule spectroscopy (W. Trabessinder, J. Phys. Chem. B 2000, No. 104, p. 5221).

### Properties of the PL polarizer

The PL polarizers according to the present invention are characterized in a high degree of polarization in their absorption and an emission which is either polarized or not.

The dichroic ratio in absorption as defined above of the PL polarizers according to the present invention is more than about 10, even more preferred are dichroic ratios of more than about 25, and most preferably the dichroic ratio is more than about 35.

For particular applications, PL polarizers according to the present invention are preferred that are characterized not only by a high degree of polarization in absorption, but also by a high degree of polarization in their emission. In this case, the dichroic ratio in emission as defined above, is more than about 5, preferably more than about 15, more preferably more than about 25 and most preferably more than about 35.

The PL polarizer may be of many useful forms, for example, but not limited to, a fiber, rod, film, sheet, layer, tape or plate, which may be homogeneous and continuous, and may be structured or patterned, and may comprise multiple individual elements, zones or pixels, or arrays thereof.

The draw ratio as defined above of the PL polarizers according to the present invention is less than about 10.

The following examples are set forth to further illustrate the present invention and should not be construed as limiting the spirit or scope of the invention.

### Example A. (Materials and methods - outside the invention)

### PL dyes used.

BPB, the chemical structure of which has been given heretofore, was purchased from GFS Chemicals. Polymers designated, respectively, EHO-OPPE, O-OPPE, and MEH-PPV, the chemical structures of which have been given heretofore, were synthesized according to the procedures described by Ch. Weder et al. (Macromolecules, (1996) Vol. 29, p. 5157), D. Steiger et al. (Macromol. Rapid Commun., (1997) Vol. 18, p. 643) and in US Patent 5,204,038. Two different EHO-OPPE samples with number-average molecular weights, Mₙ, of 10,000 gmol⁻¹, and 84,000 gmol⁻¹ (HMW-EHO-OPPE), respectively, were used, O-OPPE had a number-average molecular weight, Mₙ, of 10,000 gmol⁻¹, and MEH-PPV was of a weight-average molecular weight, M_{w}, of about 450,000 gmol⁻¹.

BPBC1, BPBC8, BPBC2-6, BPBC12, and BPBC30, the chemical structure of which have been given heretofore, were synthesized according to the following procedure: First the respective 4-alkoxy-1-iodobenzenes were prepared (where not commercially available). The latter were subsequently cross-coupled with 1,4-diethynylbenzene. Thus, K₂CO₃ (8 g) was added to DMF (30 ml) and the suspension was purged with Ar for 15 min. Then, the suspension was heated to 70 °C and 4-iodophenol (23 mmol) was added. After 10 min, the appropriate alkylbromide (alternatively 1.1 eq. of octylbromide, 2-ethylhexylbromide, dodecylbromide) was slowly added via a syringe and the suspension was stirred at 70 °C under Ar atmosphere for 4 h. The suspension was poured into ice-water (300 ml). The organic phase was collected, sometimes by extracting the aqueous phase with diethyl ether or CH₂Cl₂. The collected organic layers were washed with H₂O, aqueous NaOH (1 M) and H₂O. Where appropriate, the collected organic layers were dried with MgSO₄, filtered and evaporated in vacuo. Column chromatography (SiO₂, eluent: heptane) of the resulting crude product, sometimes followed by distillation under reduced pressure, afforded the analytically pure 4-alkoxy-1-iodobenzenes. 4-Triacontanyloxy-1-iodobenzene was prepared by dissolving, under Ar atmosphere, 1-triacontanol (500 mg, 1.139 mmol), 4-iodophenol (270 mg, 1.227 mmol) and PPh₃ (460 mg) in dry THF (16 ml) under gentle heating. Diethylazodicarboxylate (DEAD) (300 mg) was added slowly via a syringe. The solution was stirred at room temperature for 16 hr. Diethyl ether (50 ml) and H₂O (50 ml) were added and the organic layer was extracted with aqueous NaOH (1M), H₂O and saturated aqueous NaCl. The organic layer was evaporated in vacuo, and the crude product was recrystallized from diethyl ether to afford pure 4-triacontanyloxy-1-iodobenzene as a white powder. Under inert atmosphere, 1,4-diethynylbenzene (1 eq.), the respective 4-alkoxy-1-iodobenzene (2.2 eq), Pd(PPh₃)₄ (30 mg), and Cul (5 mg) were added to a mixture of toluene/diisopropylamine 3/1 v/v. After the mixture was heated to 75 °C, a precipitate started to appear. The mixture was stirred for 18 h at 75 °C. The resulting, strongly luminescent suspension was slowly dropped into an excess of methanol and the precipitate was filtered off. Recrystallization from appropriate solvents, or column chromatography (SiO₂) of the resulting crude product, afforded analytically pure 1,4-bis[2-(4',4"-alkoxyphenyl)ethynyl]benzenes.

### Carrier polymers used.

Linear low density polyethylenes (LLDPE: Dowlex NG5056E, = 0.919 gcm⁻³; Dowlex BG2340, = 0.942 gcm⁻³; Attane SL4102, = 0.905 gcm⁻³) and ultra-high molecular weight polyethylene (UHMW-PE, Hostalen Gur 412, weight-average molecular weight ∼ 4·10⁶ gmol⁻¹,) were obtained from Dow and Hoechst, respectively, and were used as carrier polymers.

### Solvent used.

Xylene (puriss. p.a., Fluka AG) was used as solvent in Example B.

### Characterization of PL materials and PL polarizers.

The anisotropic photophysical behavior of the PL polarizers according to this invention, as well as of reference materials and polarizers thereof which are outside the invention, were analyzed with polarized PL and polarized UV/Vis absorption spectroscopy. For photophysical experiments, the PL polarizers were sandwiched between two quartz slides and a small amount of silicon oil was applied, in order to minimize light scattering at the PL polarizer surfaces. In order to measure fibers, multiple filaments were tightly placed besides each other in a parallel fashion and arranged as described above. Dichroic ratios were measured as defined above.

PL spectra were recorded on a SPEX Fluorolog 3. Unpolarized light was used for excitation and a Glan-Thomson polarizer was always employed on the detector side.

UV/Vis absorption spectra were recorded on a Perkin Elmer Lambda 900 instrument, fitted with motor driven Glan-Thomson polarizers. Scattering effects were compensated in the absorption measurements by subtracting the spectra of reference samples essentially comprising the carrier polymers, which were of comparable draw ratio and dimension.

### Example B. (Comparative example outside the invention)

PL materials comprising 1 or 2 % w/w EHO-OPPE of a Mₙ of 10,000 gmol⁻¹ as the PL dye and UHMW-PE as a carrier polymer were prepared according to a prior art process (Ch. Weder et al., Adv. Mat., Vol. 9, pp. 1035-1039 (1997)) by casting a solution of the PL dye (5 or 10 mg) and UHMW-PE (0.5 g) in xylene (50 g) (dissolution at 130 °C after degassing the mixture in vacuum at 25°C for 15 min.) into a petri-dish of 11 cm in diameter. The resulting gels were dried under ambient conditions for 24 h to yield unoriented blend films which had a homogeneous thickness of about 70 m. All EHO-OPPE/ UHMW-PE blends thus prepared were found to exhibit a large-scale phase-separation between EHO-OPPE and the UHMW-PE matrix, as unequivocally visualized with optical microscopy. These films were drawn at temperatures of 90 - 120 °C on a thermostatically controlled hot shoe to a series of different draw-ratios ( final length/initial length) that ranged from 10 to 80. Draw ratios were calculated from the displacement of distance marks printed on the films prior to drawing. The oriented PL films thus obtained had a thickness in the range from about 1 to about 10 µm.

This experiment was repeated with different concentrations of, alternatively, HMW-EHO-OPPE of a Mₙ of 84,000 gmol⁻¹, O-OPPE of a Mₙ of 10,000 gmol⁻¹, MEH-PPV of a M_{w} of 450,000 gmol⁻¹, BPBC1, BPBC8, BPBC2-6, BPBC12 and BPBC30 as the PL dye. All blends thus prepared were also found to exhibit a large-scale phase-separation between the PL dye and the UHMW-PE matrix, as unequivocally visualized with optical microscopy.

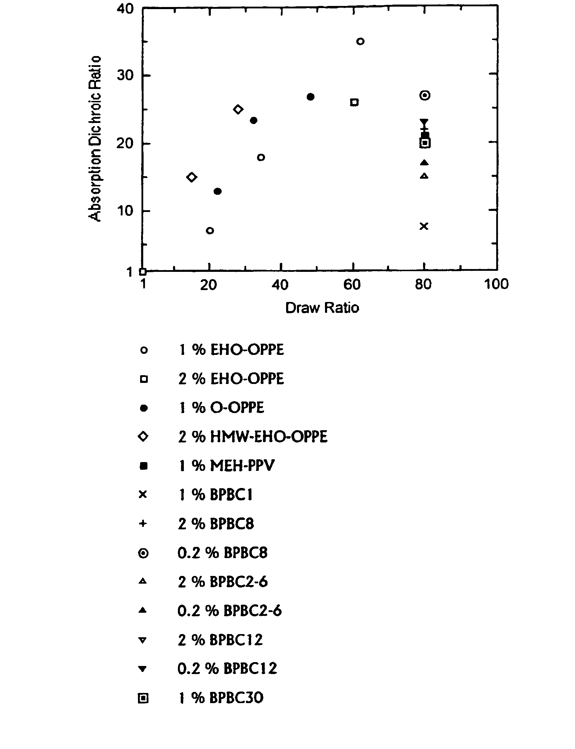

The influence of the draw ratio, the structure of the PL dye and the composition of the blends on the dichroic properties of art PL polarizers prepared in this example according to a prior art process are summarized in Figure 1. Although not indicated in the graph, the emission dichroic ratios roughly equal the values of the absorption dichroic ratios.

This comparative example clearly demonstrates that the rather complex, multistep prior art method employed in this example yields PL polarizers that are characterized in a high degree of polarization in absorption only if unpractically high draw ratios are employed. For example, to produce a PL polarizer that is characterized by a dichroic ratio in absorption of about 25, a draw ratio of at least about 30 has to be applied. These limitations clearly reflect the phase-separation of the PL dye and the carrier polymer before the orientation step. Moreover, in contrast to the process according to the present invention in which a solvent may be optionally used, a solvent is required in this process.

### Example C. (Comparative example outside the invention)

LLDPE pellets (5 g Dowlex BG2340, = 0.942 gcm⁻³) and BPB (100 mg) were fed into a recycling, co-rotating twin-screw mini-extruder (Commercially available from DACA Instruments, Santa Barbara, CA), and mixed for 10 min at 155 or 185 °C, that is, below or above the melting temperature of the BPB guest (176 - 178°C), and were subsequently extruded. Films were prepared by compression-molding the extruded blends between two Mylar®-foils in a Carver press at a temperature similar to the one at which they were melt-mixed. All resulting blend films had a thickness of about 110 - 130 m. All BPB / LLDPE blends thus prepared were found to exhibit a large-scale phase-separation between BPB and the LLDPE matrix, as unequivocally visualized with optical microscopy. The films were uniaxially drawn at a temperature of about 90 °C on a thermostatically controlled hot shoe to draw ratios of about 10, as calculated from the displacement of distance marks printed on the films prior to drawing. Only very low absorption dichroic ratios of below about 4 were measured for the PL polarizers thus obtained. This comparative example clearly demonstrates that orientation of melt-processed, phase-separated blends does not yield PL polarizers according to the present invention if the composition of the blend is not adequately selected.

### Example D. (Comparative example outside the invention)

LLDPE pellets (5 g Dowlex NG5056E) were fed into a recycling, co-rotating twin-screw mini-extruder (Commercially available from DACA Instruments, Santa Barbara, CA), and mixed for 10 min at 155 °C, and were subsequently extruded. Films were prepared by compression-molding the extruded material between two Mylar®-foils in a Carver press at a temperature of 155 °C. The resulting film had a thickness of about 120 m. The film was immersed for 24h in a solution of BPBC12 (about 1 % w/w) in CHCl₃. In the following, the film was rinsed with CHCL₃, dried and uniaxially drawn at a temperature of about 90 °C on a thermostatically controlled hot shoe to draw ratios of about 10, as calculated from the displacement of distance marks printed on the films prior to drawing. The PL film thus prepared shows highly polarized absorption and emission as characterized by an absorption dichroic ratio of about 30 and an emission dichroic ratio of also about 30. Unfortunately, this process only results blend films with a comparably low concentration of the PL dye, 0.05 % w/w in the present case. Also it is very difficult to exactly control this concentration.

### Example 1.

LLDPE pellets (5 g Dowlex NG5056E) and BPBC12 (10, 40 or 100 mg, respectively) were fed into a recycling, co-rotating twin-screw mini-extruder (Commercially available from DACA Instruments, Santa Barbara, CA), and mixed for 10 min at 155 or 180 °C, and were subsequently extruded. Films were prepared by compression-molding the extruded blends between two Mylar®-foils in a Carver press at a temperature similar to the one at which they were melt-mixed. All resulting blend films had a thickness of about 110 - 130 m. All BPBC12 / LLDPE blend films thus prepared were found to exhibit an essentially homogeneous appearance as determined by polarized optical microscopy. The films were uniaxially drawn at a temperature of about 90 °C on a thermostatically controlled hot shoe to draw ratios of about 10, as calculated from the displacement of distance marks printed on the films prior to drawing. All PL polarizers, according to the present invention, thus prepared show unexpectedly highly polarized absorption and emission, as demonstrated in Figure 2 for a 0.2 % w/w BPBC12 / LLDPE blend PL polarizer film of a draw ratio of 10. The latter was characterized by an absorption dichroic ratio of about 50 and an emission dichroic ratio of also about 50. All other PL polarizers prepared in this example were characterized by absorption dichroic ratios of at least about 30 and emission dichroic ratios of also at least about 30. This example clearly demonstrates that the application of the manufacturing process for PL polarizers according to the present invention can be used to manufacture PL polarizers that are characterized in an extremely high degree of polarization in absorption of at least 30, but preferably up to about 50, at conveniently low draw ratios of at most about 10. The example further shows that useful blend compositions can significantly vary in the concentration of the PL dye, and can be processed according to the present invention in a wide temperature range. Most importantly, the example evidences the importance of producing, according to the present invention, a homogeneous blend prior to the orientation step. In comparison with Example D., this example also shows that useful blend compositions can be produced with a substantially higher concentration of the PL dye that can be achieved by diffusion based methods. The finally obtained PL polarizers nevertheless exhibit at least the same high dichroic ratios.

### Example 2.

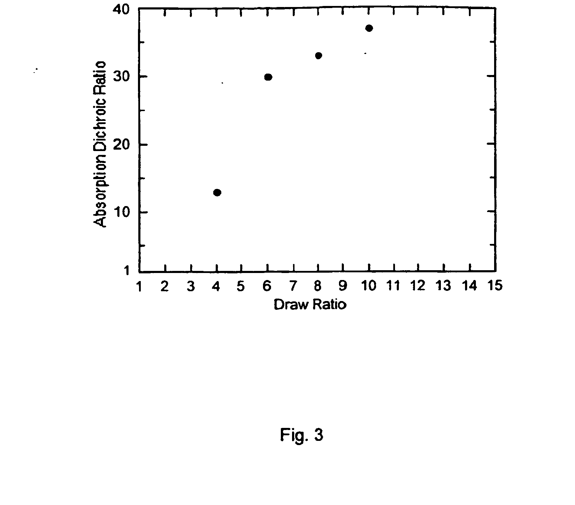

Experiment 1 was repeated with 10 mg of BPBC12, Dowlex BG2340 was employed instead of Dowlex NG5056E and melt-mixing and melt-processing were carried out at 180 °C. The homogeneous blend films (as determined by polarized optical microscopy) were uniaxially drawn to different draw ratios of between about 4 and about 10. The influence of the draw ratio on the absorption dichroic ratio is shown in Figure 3. All PL polarizers thus prepared show highly polarized absorption and, although not shown in the graph, an about equally polarized emission. For example, a draw ratio of only 4 yielded a PL polarizer that was characterized by a dichroic ratio in absorption of 13.

This example clearly demonstrates that by the manufacturing process for PL polarizers, according to the present invention, PL polarizers can be obtained that are characterized in a high degree of polarization in absorption of well above 10, already at draw ratios of less than 5.

### Example 3.

Experiment 1 was repeated, Dowlex BG2340 was employed instead of Dowlex NG5056E, and instead of BPBC12, 10 mg of alternatively BPBC1, BPBC8, BPBC2-6 or BPBC30 were used. Melt-mixing and melt-processing was carried out at 180 °C. All blend films thus prepared were found to exhibit a homogeneous appearance (as determined by polarized optical microscopy). All PL polarizers thus prepared show extremely highly polarized absorption and emission, characterized in absorption dichroic ratios of 30 (BPBC1), 37 (BPBC8), 26 (BPBC2-6) and 33 (BPBC30), and emission dichroic ratios that were similar to the respective value in absorption. The experiments were repeated for, alternatively, Dowlex NG5056E and Attane SL4102 (in case of Attane SL4102 the films were uniaxially drawn at a temperature of about 70 °C) as the carrier polymer resulting in PL polarizers with similar dichroic ratios as for Dowlex BG2340 and these PL polarizers were characterized by absorption dichroic ratios of at least about 25 and emission dichroic ratios of also at least about 25.

Experiment 1 was again repeated with 10 mg of BPBC8, i-PP was employed instead of Dowlex NG5056E and melt-mixing and melt-processing were carried out at 220 °C. A homogeneous (as determined by polarized optical microscopy) blend film thus produced was uniaxially drawn at 135 °C to a draw ratio of about 14, yielding a PL polarizer that was characterized by a dichroic ratio in absorption of 29.

This example illustrates that by appropriately selecting the PL dye and the carrier polymer, a variety of compositions can be used to produce PL polarizers characterized in a very high degree of polarization in absorption at conveniently low draw ratios by a process according to the present invention.

### Example 4.

Experiment 1 was repeated, but instead of BPBC12, 10 mg of EHO-OPPE of a Mₙ of 10,000 gmol⁻¹, was used. Melt-mixing and melt-processing was carried out at 155 °C and the films which were found to exhibit a homogeneous appearance (as determined by polarized optical microscopy) were uniaxially drawn to a draw ratio of about 12. All PL polarizers thus prepared show highly polarized absorption and emission, characterized in absorption dichroic ratios of about 7 and emission dichroic ratios of about 11.

This example demonstrates that also PL polymers can be used as the PL dye to produce PL polarizers by a process according to the present invention.

### Example 5.

Experiment 1 was repeated with 10 mg of BPBC12 and melt-mixing at 155 °C, but rather than compression-molding the extruded blends into films, fibers were spun from the melt (on a micro-spinning device commercially available from DACA Instruments, Santa Barbara, CA) at 155 °C. The resulting blend fibers had a diameter of about 100 - 150 m and were found to exhibit a homogeneous appearance (as determined by polarized optical microscopy). The fibers were uniaxially drawn at a temperature of about 90 °C on a thermostatically controlled hot shoe to draw ratios of about 10, as calculated from the displacement of distance marks printed on the fibers prior to drawing. All PL polarizers thus prepared show unexpectedly highly polarized absorption and emission and are characterized by an absorption dichroic ratio of about 37 and an emission dichroic ratio of also about 42.

This example demonstrates that PL polarizers formed by a process according to the present invention can exist a variety of forms.

### Example 6.

Experiment 1 was repeated with 10 mg BPBC12, and 10 mg of sexi(octylthiophene) were added as an emitter. Melt-mixing and melt-processing was carried out at 180 °C. The blend films thus prepared were found to exhibit a homogeneous appearance (as determined by polarized optical microscopy). All PL polarizers thus prepared show extremely highly polarized absorption, characterized in absorption dichroic ratios of about 15, but an essentially unpolarized emission, characterized in emission dichroic ratios of about 3.

This example illustrates that by appropriately selecting the PL dye and an additional emitter, PL polarizers can be produced by a process according to the present invention that are characterized by a highly polarized absorption and an essentially unpolarized emission.

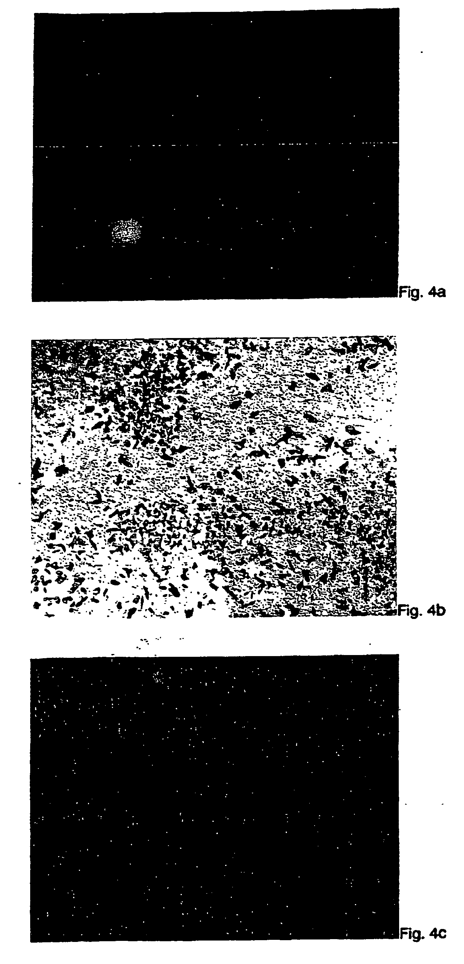

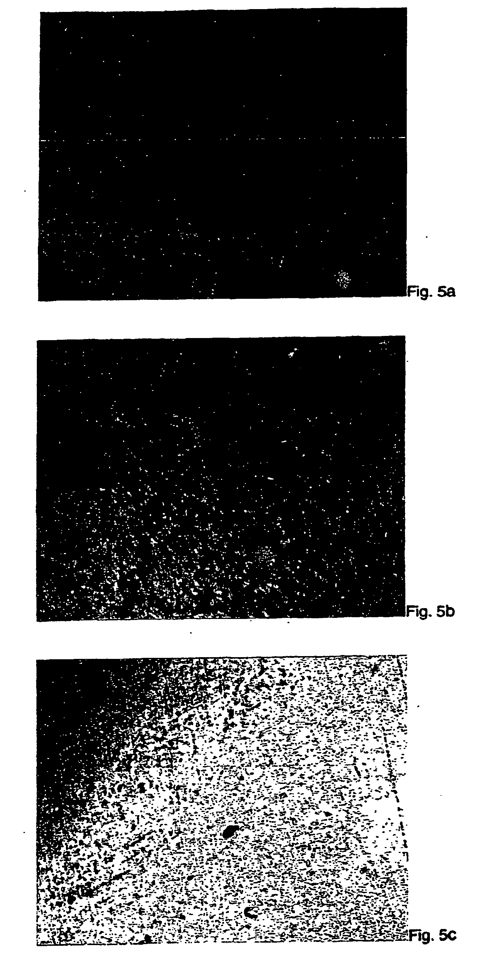

With reference now to Figs. 4 and 5 illustrative and comparative examples shall be given for blends showing an undesirable phase-separation between the PL dye and the carrier polymer on the one hand, and blends showing a (more than) sufficient homogenity between the PL dye and the carrier polymer according to the present invention on the other hand.Fig. 4 shows under a) - c) three images of about 120 micrometer thick films taken by unpolarized optical microscopy each:
Fig. 4 a) shows an unstreched LLDPE reference blend film, prepared according to the procedures of Example C, but omitting the addition of BPB.
Fig. 4 b) shows an unstreched LLDPE / 0.2 % w/w BPB blend film, prepared according to the procedures of Example C, but using 10 mg instead of 100 mg BPB. The picture shows a large number of undesirable domains, clusters or aggregations that have been developed by phase-separation between BPB and the LLDPE matrix.
Fig. 4 c) shows an unstreched LLDPE / 0.2 % w/w BPBC8 blend film, prepared according to the procedures of Example 3 and according to the present invention. The picture unequivocally demonstrates the homogenity of the blend film according to the present invention. Almost no phase separation between BPB and the LLDPE matrix occured. Fig. 5 shows under a) - c) three images of about 120 micrometer thick films taken by polarized optical microscopy each:
Fig. 5 a) shows an unstreched LLDPE reference blend film, prepared according to the procedures of Example C, but omitting the addition of BPB.
Fig. 5 b) shows an unstreched LLDPE / 0.2 % w/w BPB blend film, prepared according to the procedures of Example C, but using 10 mg instead of 100 mg BPB. The picture shows a large number of undesirable domains, clusters or aggregations that have been developed by phase-separation between BPB and the LLDPE matrix.
Fig. 5 c) shows an unstreched LLDPE / 0.2 % w/w BPBC8 blend film, prepared according to the procedures of Example 3 and according to the present invention. The picture unequivocally demonstrates the homogenity of the blend film according to the present invention. Almost no phase separation between BPB and the LLDPE matrix occured.

## Claims

1. A process for forming a photoluminescent polarizer comprising the steps of
(a) providing a blend comprising at least one, non-liquid crystalline small molecule photoluminescent dye and at least one semicrystalline polyolefin carrier polymer by melt-mixing and
(b) melt-processing said blend into a body having a first shape and
(c) anisotropically distorting said first shape of said body by a draw ratio of less than about 10 to yield said photoluminescent polarizer,
wherein said photoluminescent polarizer is **characterized by** a dichroic ratio in absorption of more than about 10 at a wavelength that can be employed for photoexcitation, and
wherein said photoluminescent polarizer is **characterized by** an emission which is either polarized or not,
wherein phase separation between the photoluminsecent dye and the carrier polymer is reduced or avoided during the steps of melt-processing and object-forming.

2. A process according to claim 1, wherein said photoluminescent polarizer is **characterized by** a dichroic ratio in absorption of more than about 25 at a wavelength that can be employed for photoexcitation.

3. A process according to claim 1-2, wherein said photoluminescent polarizer is **characterized by** a dichroic ratio in absorption of more than about 35 at a wavelength that can be employed for photoexcitation.

4. A process according to claims 1-3, wherein said photoluminescent polarizer is **characterized by** a dichroic ratio in emission of more than about 5.

5. A process according to claims 1-4, wherein said photoluminescent polarizer is **characterized by** a dichroic ratio in emission of more than about 10.

6. A process according to claims 1-5, wherein said photoluminescent polarizer is **characterized by** a dichroic ratio in emission of more than about 25.

7. A process according to claims 1-6, wherein said photoluminescent polarizer is **characterized by** a dichroic ratio in emission of more than about 35.

8. A process according to claims 1-7, wherein at least one of said photoluminescent dyes is a polymer.

9. A process according to claims 1-7, wherein none of said photoluminescent dyes is a polymer.

10. A process according to claims 1-9, wherein at least one of said photoluminescent dyes is selected from the group of BPBC1, BPBC8, BPBC2-6, BPBC12, BPBC30, EHO-OPPE, O-OPPE, MEH-PPV.

11. A process according to claims 1-10, wherein at least one of said carrier polymers is semicrystalline.

12. A process according to claims 1-11, wherein at least one of said carrier polymers is essentially amorphous.

13. A process according to claims 1-15, wherein at least one of said carrier polymers is selected from the group of polyethene, polypropylene.

14. A process according to claims 1-13, wherein said photoluminescent polarizer additionally comprises an emitter.

15. A process according to claims 1-14, wherein said blend, after being processed into said into said body having a first shape is essentially homogeneous, as determined by optical microscopy and/or thermal methods and/or X-ray diffraction methods and/or single molecule spectroscopy.

16. A process according to claims 1-15, wherein said step of providing a blend comprising at least one photoluminescent dye and at least one carrier polymer by melt-mixing includes adjusting the concentration of the photoluminescent dye in the carrier polymer to a value above the value that could be obtained by a diffusion based process.

17. A photoluminescent polarizer based on at least one semicrystalline polyolefin carrier polymer, comprising at least one, non-liquid crystalline small molecule photoluminescent dye, that is **characterized by** a dichroic ratio in absorption of more than about 10 at a wavelength that can be employed for photoexcitation, and that is **characterized by** an emission which is either polarized or not, and which is formed by a process according to claims 1-16.

18. A photoluminescent polarizer according to claim 17, that is **characterized by** a dichroic ratio in emission of more than about 10.

19. A photoluminescent polarizer according to claims 17-18, wherein the concentration of the photoluminescent dye in the carrier polymer is adjusted to a value above the value that could be obtained by a diffusion based process.

## Revendications

1. Procédé de formation d'un polariseur photoluminescent comprenant les étapes consistant à
(a) se procurer un mélange comprenant au moins un colorant photoluminescent à petites molécules n'ayant pas la structure d'un cristal liquide et au moins un polymère de support de type polyoléfine semi-cristalline par mélange en fusion et
(b) traiter en fusion ledit mélange pour en faire un corps ayant une première forme et
(c) déformer de façon anisotrope ladite première forme dudit corps d'un rapport d'étirage inférieur à environ 10, pour obtenir ledit polariseur photoluminescent,
dans lequel ledit polariseur photoluminescent est **caractérisé par** un rapport dichroïque en absorption de plus d'environ 10 à une longueur d'onde pouvant être employée pour la photoexcitation, et
dans lequel ledit polariseur photoluminescent est **caractérisé par** une émission qui est polarisée ou non,
dans lequel la séparation des phases entre le colorant photoluminescent et le polymère de support est réduite ou évitée pendant les étapes de traitement en fusion et de formation d'un objet.

2. Procédé selon la revendication 1, dans lequel ledit polariseur photoluminescent est **caractérisé par** un rapport dichroique en absorption de plus d'environ 25 à une longueur d'onde pouvant être employée pour la photoexcitation.

3. Procédé selon les revendications 1-2, dans lequel ledit polariseur photoluminescent est **caractérisé par** un rapport dichroique en absorption de plus d'environ 35 à une longueur d'onde pouvant être employée pour la photoexcitation.

4. Procédé selon les revendications 1-3, dans lequel ledit polariseur photoluminescent est **caractérisé par** un rapport dichroique en émission de plus d'environ 5.

5. Procédé selon les revendications 1-4, dans lequel ledit polariseur photoluminescent est **caractérisé par** un rapport dichroique en émission de plus d'environ 10.

6. Procédé selon les revendications 1-5, dans lequel ledit polariseur photoluminescent est **caractérisé par** un rapport dichroïque en émission de plus d'environ 25.

7. Procédé selon les revendications 1-6, dans lequel ledit polariseur photoluminescent est **caractérisé par** un rapport dichroïque en émission de plus d'environ 35.

8. Procédé selon les revendications 1-7, dans lequel au moins un desdits colorants photoluminescents est un polymère.

9. Procédé selon les revendications 1-7, dans lequel un desdits colorants photoluminescents est un polymère.

10. Procédé selon les revendications 1-9, dans lequel au moins un desdits colorants photoluminescents est choisi dans le groupe de BPBC1, BPBC8, BPBC2-6, BPBC12, BPBC30, EHO-OPPE, O-OPPE, MEH-PPV.

11. Procédé selon les revendications 1-10, dans lequel au moins un desdits polymères de support est semi-cristallin.

12. Procédé selon les revendications 1-11, dans lequel au moins un desdits polymères de support est essentiellement amorphe.

13. Procédé selon les revendications 1-15, dans lequel au moins un desdits polymères de support est choisi dans le groupe du polyéthène, du polypropylène.

14. Procédé selon les revendications 1-13, dans lequel ledit polariseur photoluminescent comprend en plus un émetteur.

15. Procédé selon les revendications 1-14, dans lequel ledit mélange, après avoir été transformé en ledit corps ayant une première forme, est essentiellement homogène, selon une détermination faite par microscopie optique et/ou par des méthodes thermiques et/ou par des méthodes de diffraction X et/ou par spectroscopie de molécules individuelles.

16. Procédé selon les revendications 1-15, dans lequel ladite étape consistant à se procurer un mélange comprenant au moins un colorant photoluminescent et au moins un polymère de support par mélange en fusion comprend l'ajustement de la concentration du colorant photoluminescent dans le polymère de support à une valeur supérieure à la valeur susceptible d'être obtenue par un procédé à base de diffusion.

17. Polariseur photoluminescent à base d'au moins un polymère de support de type polyoléfine semi-cristalline, comprenant au moins un colorant photoluminescent à petites molécules n'ayant pas la structure d'un cristal liquide, qui est **caractérisé par** un rapport dichroique en absorption de plus d'environ 10 à une longueur d'onde pouvant être employée pour la photoexcitation, et qui est **caractérisé par** une émission qui est polarisée ou non, et qui est formé par un procédé selon les revendications 1-16.

18. Polariseur photoluminescent selon la revendication 17, qui est **caractérisé par** un rapport dichroique en émission de plus d'environ 10.

19. Polariseur photoluminescent selon les revendications 17-18, dans lequel la concentration du colorant photoluminescent dans le polymère de support est ajustée à une valeur supérieure à la valeur susceptible d'être obtenue par un procédé à base de diffusion.

## Patentansprüche

1. Verfahren zur Herstellung eines photolumineszenten Polarisators, bei dem man
(a) durch Mischen in der Schmelze eine mindestens einen nicht-flüssigkristallinen kleinmoleküligen photolumineszenten Färbstoff und mindestens ein teilkristallines Polyolefinträgerpolymer enthaltende Mischung bereitstellt und
(b) die Mischung in der Schmelze zu einem Körper mit einer ersten Form verarbeitet und
(c) die erste Form des Körpers mit einem Streckverhältnis von weniger als etwa 10 anisotrop verformt, wobei man den photolumineszenten Polarisator erhält,
wobei der photolumineszente Polarisator durch ein dichroitisches Verhältnis in Absorption von mehr als etwa 10 bei einer Wellenlänge, die zur Photoanregung eingesetzt werden kann, **gekennzeichnet** ist und
wobei der photolumineszente Polarisator durch eine polarisierte oder nicht polarisierte Emission **gekennzeichnet** ist,
wobei die Phasentrennung zwischen dem photolumineszenten Farbstoff und dem Trägerpolymer bei den Schritten der Verarbeitung in der Schmelze und der Ausbildung des Gegenstands verringert oder vermieden wird.

2. Verfahren nach Anspruch 1, bei dem der photolumineszente Polarisator durch ein dichroisches Verhältnis in Absorption von mehr als etwa 25 bei einer Wellenlänge, die zur Photoanregung eingesetzt werden kann, **gekennzeichnet** ist.

3. Verfahren nach Anspruch 1-2, bei dem der photo-lumineszente Polarisator durch ein dichroisches Verhältnis in Absorption von mehr als etwa 35 bei einer Wellenlänge, die zur Photoanregung eingesetzt werden kann, **gekennzeichnet** ist.

4. Verfahren nach den Ansprüchen 1-3, bei dem der photolumineszente Polarisator durch ein dichroisches Verhältnis in Emission von mehr als etwa 5 **gekennzeichnet** ist.

5. Verfahren nach den Ansprüchen 1-4, bei dem der photolumineszente Polarisator durch ein dichroisches Verhältnis in Emission von mehr als etwa 10 **gekennzeichnet** ist.

6. Verfahren nach den Ansprüchen 1-5, bei dem der photolumineszente Polarisator durch ein dichroisches Verhältnis in Emission von mehr als etwa 25 **gekennzeichnet** ist.

7. Verfahren nach den Ansprüchen 1-6, bei dem der photolumineszente Polarisator durch ein dichroisches Verhältnis in Emission von mehr als etwa 35 **gekennzeichnet** ist.

8. Verfahren nach den Ansprüchen 1-7, bei dem es sich bei mindestens einem der photolumineszenten Farbstoffe um ein Polymer handelt.

9. Verfahren nach den Ansprüchen 1-7, bei dem es sich bei keinem der photolumineszenten Farbstoffe um ein Polymer handelt.

10. Verfahren nach den Ansprüchen 1-9, bei dem man mindestens einen der photolumineszenten Farbstoffe aus der Gruppe BPBC1, BPBC8, BPBC2-6, BPBC12, BPBC30, EHO-OPPE, O-OPPE, MEH-PPV auswählt.

11. Verfahren nach den Ansprüchen 1-10, bei dem mindestens eines der Trägerpolymere teilkristallin ist.

12. Verfahren nach den Ansprüchen 1-11, bei dem mindestens eines der Trägerpolymere im wesentlichen amorph ist.

13. Verfahren nach den Ansprüchen 1-12, bei dem man mindestens eines der Trägerpolymere aus der Gruppe Polyethylen, Polypropylen auswählt.

14. Verfahren nach den Ansprüchen 1-13, bei dem der photolumineszente Polarisator außerdem auch noch einen Emitter enthält.

15. Verfahren nach den Ansprüchen 1-14, bei dem die Mischung nach der Verarbeitung zu dem Körper mit einer ersten Form gemäß Lichtmikroskopie und/oder thermischen Methoden und/oder Röntgenbeugungsmethoden und/oder Einzelmolekülspektroskopie im wesentlichen homogen ist.

16. Verfahren nach den Ansprüchen 1-15, bei dem man im Schritt der Bereitstellung einer mindestens einen photolumineszenten Farbstoff und mindestens ein Trägerpolymer enthaltenden Mischung durch Mischen in der Schmelze die Konzentration des photolumineszenten Farbstoffs in dem Trägerpolymer auf einen über dem durch ein auf Diffusion basierendes Verfahren erhältlichen Wert liegenden Wert einstellt.

17. Photolumineszenter Polarisator auf Basis von mindestens einem teilkristallinen Polyolefinträgerpolymer, enthaltend mindestens einen nicht-flüssigkristallinen kleinmoleküligen photolumineszenten Farbstoff, der durch ein dichroisches Verhältnis in Absorption von mehr als etwa 10 bei einer Wellenlänge, die zur Photoanregung eingesetzt werden kann, **gekennzeichnet** ist, der durch eine polarisierte oder nicht polarisierte Emission **gekennzeichnet** ist und der durch ein Verfahren gemäß den Ansprüchen 1-16 hergestellt worden ist.

18. Photolumineszenter Polarisator nach Anspruch 17, der durch ein dichroisches Verhältnis in Emission von mehr als etwa 10 **gekennzeichnet** ist.

19. Photolumineszenter Polarisator nach den Ansprüchen 17-18, bei dem die Konzentration des photolumineszenten Farbstoffs in dem Trägerpolymer auf einen über dem durch ein auf Diffusion basierendes Verfahren erhältlichen Wert liegenden Wert eingestellt ist.
